# EUROPEAN PATENT SPECIFICATION

(11) **EP 4 230 452 B1**
(45) Date of publication and mention of the grant of the patent: **19.02.2025**
(21) Application number: 21920248.8
(22) Date of filing: 21.01.2021
(51) Int. Cl.: B60J 1/00, B60R 13/04, B62D 25/20, B60J 10/77

(54) **SIDE TRIM PANEL ASSEMBLY AND VEHICLE**
SEITENVERKLEIDUNGSANORDNUNG UND FAHRZEUG
ENSEMBLE PANNEAU DE GARNITURE LATÉRALE ET VÉHICULE

(43) Date of publication of application: 23.08.2023
(73) Proprietor: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: ZHANG, Shuanghua, Hangzhou, Zhejiang 310051 (CN); DAI, Kaihong, Hangzhou, Zhejiang 310051 (CN); XIAO, Yang, Hangzhou, Zhejiang 310051 (CN)
(74) Representative: Dai, Simin
(86) International application number: PCT/CN2021/073093
(87) International publication number: WO 2022/155846

(56) References cited:
- CN-A- 102 529 648
- CN-A- 107 487 167
- CN-U- 204 774 552
- CN-U- 207 630 936
- JP-A- 2016 120 748
- JP-A- H06 156 159
- US-A1- 2003 042 755
- US-A1- 2005 235 573
- US-A1- 2019 077 239
- US-B1- 9 809 097

## Description

### TECHNICAL FIELD

This invention relates to the field of vehicle technology, and in particular to a side trim assembly and a vehicle.

### BACKGROUND

A typical vehicle is provided with a body side assembly on a door thereof, and the body side assembly generally includes an exterior panel, a reinforcement plate, and an interior panel. A window frame is provided at a lower portion of the exterior panel, and is connected to the exterior panel, and the window frame and the exterior panel are sealed by a side seal therebetween. The window frame is provided with an installation structure for installing a window frame seal, where the window frame seal is used to seal an upper side of a door glass.

With the existing structure of the body side assembly on the door, the side seal and the window frame are both exposed and visible from the side of the vehicle, which affects the aesthetics of the vehicle.

US 2005/235573 A1 discloses a one-piece retainer, which is preferably an injection molded that receives and retains a weatherseal therein. The retainer assembly includes first and second portions that are bonded together to form the one-piece retainer. Fasteners further aid in securing the portions together and also securing the assembly to the associated vehicle. An outer show surface portion overlies a door body side of the vehicle. The show surface covers a cavity that serves as a water management channel around the perimeter of the window opening.

US 2019/077239 A1 discloses a sealing and cover strip for the B-pillar of a passenger vehicle with a support cover and a decorative cover, which have a sealing profile for a lowerable side window on at least one of their common longitudinal sides. It is the object of the present invention to improve a sealing and cover strip of the type mentioned above in such a way that the assembly effort during production of the vehicle is reduced and also the optical appearance is improved so that the sealing profile consists of two sealing halves, one respective half being connected to the decorative cover and the respective other half to the support cover.

US 2003/042755 A1 discloses a structure of a roof-side portion of a motor vehicle having a roof-side garnish composed of a synthetic resin, which is attached to the roof-side portion including a front pillar. The garnish has a band-shaped main portion, and an attaching portion which protrudes inwardly from about a widthwise center of an inside surface of the main portion in a direction perpendicular thereto. The attaching portion is secured to a door-opening surface of the roof-side portion, which defines a door opening in a vehicle body, such that an upper part of the main portion covers a roof-side surface of the roof-side portion, and a lower part of the main portion extends downwardly of an outside end of the roof-side surface. A retainer is secured to the attaching portion of the garnish on the inner side of a closed door glass so as to face the lower part of the garnish through the closed door glass. And a roof-side weather strip is fitted between the lower part of the garnish and the retainer, and bonded to the attaching portion of the garnish in the position between the main portion of the garnish and the retainer.

WO2020022020A1 discloses a pillar outer garnish attachment structure. According to the present invention, a pillar outer garnish is attached along a front pillar inserted between door glasses and a front glass, and along a roof side rail inserted between the door glasses and a roof glass. The outer edges of the pillar outer garnish in the vehicle width direction are respectively fastened by a mechanical fastening means to the front pillar and the roof side rail via retainers that hold door glass seal rubbers contacting the door glasses. Therefore, the long pillar outer garnish, which is bent at the boundary between the front pillar and the roof side rail, can be easily and reliably fixed, and the thickness and weight of the pillar outer garnish can be reduced by using the stiffness of the retainer to reinforce the stiffness of the pillar outer garnish.

US9809097B1 discloses vehicle seal retainers, methods for making and methods for using vehicle seal retainers, and motor vehicles with pillar seal retainers. Disclosed, for example, is a seal retainer carrier for mounting a seal structure between the outer applique and body structure of a motor vehicle. The seal structure includes a flexible body with two seal lips. The outer applique has a tab and a flange. The seal retainer carrier includes a base attached to the vehicle's body structure. A first interface flange projects from the base and attaches to the outer applique's flange. A second interface flange projects from the base and includes a protruding rib attached to a second seal lip. This rib fits into a recessed groove of the seal structure such that the seal mounts between the outer applique and body structure with a hook of a first seal lip seated against the outer applique's tab. US9809097B1 discloses a vehicle according to the preamble of claim 1.

### SUMMARY

In view of the above problems, the present invention is proposed in order to provide a vehicle which overcomes the above problems or at least partially solve the above problems.

An objective in a first aspect of the present invention is to provide a side trim assembly which can improve the aesthetics of the vehicle.

Another objective of the present invention is to provide a side trim structure in which an installation function for installing a window frame seal is integrated.

An objective in a second aspect of the present invention is to provide a vehicle including the above side trim assembly, which has good aesthetics.

Another objective in the second aspect of the present invention is to reduce the manufacturing cost and increase the production efficiency of the vehicle by means of an installation structure of the side trim assembly to a body side assembly of the vehicle.

In particular, according to an aspect of embodiments of the present invention, there is provided a vehicle as defined in claim 1.

Optionally, the limit rib extends towards an inner and lower side of the vehicle.

Optionally, the interior trim panel is provided with a boss that protrudes towards the body side assembly, and a first installation hole is provided on a top surface of the boss for a first fastener to pass through, such that the side trim assembly is fixed to the body side assembly.

Optionally, a second installation hole is provided at the bottom for a second fastener to pass through, such that the side trim assembly is fixed to the body side assembly.

Optionally, the interior trim panel is fixed to the exterior trim panel by bonding.

Optionally, the exterior trim panel completely covers the installation structure and the window frame seal on a side of the vehicle.

Optionally, the body side assembly includes a front door side assembly, and the front door side assembly includes a front exterior panel, a front reinforcement plate, and a front interior panel sequentially provided in the direction from the outer side to the inner side of the door. A lower end of the front exterior panel is configured in a shape matching a bottom of the interior trim panel, and is provided with a third installation hole aligned with a second installation hole at the bottom of the interior trim panel for a second fastener to pass through.

Optionally, the second fastener includes an expansion nut and a screw matching each other. The expansion nut passes through the third installation hole and a cap of the expansion nut is provided between the front exterior panel and the interior trim panel. The screw passes through the second installation hole of the interior trim panel from a side of the interior trim panel away from the front exterior panel and is tightened with the expansion nut.

Optionally, the body side assembly includes a rear door side assembly, and the rear door side assembly includes a rear exterior panel, a rear reinforcement plate, and a rear interior panel sequentially provided in the direction from the outer side to the inner side of the door. An upper portion of the rear exterior panel is configured in a shape matching a boss of the interior trim panel, and is provided with a fourth installation hole aligned with a first installation hole in the boss for a first fastener to pass through.

Optionally, the first fastener includes a metal nut, a sealing gasket, and a bolt matching each other, and the bolt passes through the first installation hole in the boss, the sealing gasket, and the fourth installation hole in the rear exterior panel in sequence, and is tightened with the metal nut.

The present invention proposes a new side trim assembly including an exterior trim panel and an interior trim panel fixedly connected to each other, where the interior trim panel is connected to a body side assembly, and a lower end of the exterior trim panel and a lower end of the interior trim panel together define an installation structure for installing a window frame seal. The above structure eliminates the original window frame and side seal to reduce the number of components and parts and the costs, and avoids the aesthetic problems caused by the original window frame and side seal being exposed, to reflect a simple, novel and beautiful styling.

Further, according to the present invention, the limit rib of the exterior trim panel forms the installation structure together with the bottom and the hook of the interior trim panel, and the limit rib is provided on the inner side of the exterior trim panel and corresponding to the hook, such that the entire installation structure is hidden inside the exterior trim panel, which further improves the aesthetics of the structure while ensuring the installation of the window frame seal.

Further, the installation structure for installing the window frame seal is integrated into the side trim assembly according to the present invention, and the side trim assembly can be installed and fixed to the body side assembly only through the first fastener and the second fastener. Therefore, compared with the structure provided with the window frame and the side seal in the related art, the number of assembly processes is reduced during assembly, the production cost and the production time are reduced, and the production efficiency is improved, while reducing the probability of production rework and scrap and improving the quality of the whole vehicle. Due to the elimination of the window frame and the side seal, the management cost is reduced.

The foregoing description is only an overview of the technical solution of the present invention. In order to enable a clearer understanding of the technical means of the present invention to be implemented in accordance with the contents in the description, and in order to make the above and other objectives, features and advantages of the present invention more obvious and understandable, particular embodiments of the present invention will be exemplified below.

The above and other objectives, advantages and features of the present invention will be better understood by those skilled in the art in the light of the detailed description of particular embodiments of the present invention in connection with the accompanying drawings below.

### BRIEF DESCRIPTION OF THE DRAWINGS

Some particular embodiments of the present invention will be described in detail below in an exemplary, but not limiting, manner with reference to the accompanying drawings. Like reference numerals in the accompanying drawings indicate like or similar parts or portions. It should be understood by those skilled in the art that these accompanying drawings are not necessarily to scale.
FIG. 1 is a schematic cross-sectional view of a side trim assembly according to an embodiment of the present invention.
FIG. 2 is a schematic cross-sectional view of a side trim assembly in an assembled state with a first fastener according to another embodiment of the present invention.
FIG. 3 is a front view of a door of a vehicle according to an embodiment of the present invention.
FIG. 4 is a cross-sectional view taken along line A-A in FIG. 3.
FIG. 5 is a partial enlarged view of part B in FIG. 4.
FIG. 6 is a cross-sectional view taken along line C-C in FIG. 3.
FIG. 7 is a partial enlarged view of part D in FIG. 6.
FIG. 8 is a flowchart of a method of assembling a side trim assembly according to an embodiment of the present invention.

### DETAILED DESCRIPTION OF THE EMBODIMENTS

Exemplary embodiments of the present disclosure will be described in more detail below with reference to the accompanying drawings. While the exemplary embodiments of the present disclosure are shown in the accompanying drawings, it should be understood that the present disclosure can be implemented in various forms and should not be limited by the embodiments set forth herein. Rather, these embodiments are provided for a more thorough understanding of the present disclosure and to fully convey the scope of the present disclosure to those skilled in the art.

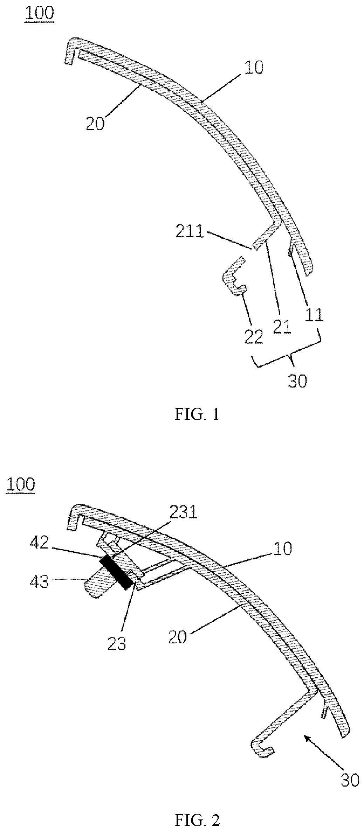

FIG. 1 is a schematic cross-sectional view of a side trim assembly 100 according to an embodiment of the present invention. As shown in FIG. 1, in an embodiment, the side trim assembly 100 includes an exterior trim panel 10 and an interior trim panel 20 sequentially provided in a direction from an outer side to an inner side of a door of a vehicle and fixedly connected to each other. The interior trim panel 20 can be fixed to the exterior trim panel 10, for example, by bonding through a structural adhesive. A side of the interior trim panel 20 away from the exterior trim panel 10 is connected to a body side assembly 200. The body side assembly 200 generally includes at least an exterior panel and an interior panel. Herein, the interior trim panel 20 may be connected to the exterior panel. A lower end of the exterior trim panel 10 and a lower end of the interior trim panel 20 together define an installation structure 30 for installing a window frame seal 60.

The present embodiment proposes a new side trim assembly 100 including an exterior trim panel 10 and an interior trim panel 20 fixedly connected to each other. The interior trim panel 20 is connected to a body side assembly 200, and a lower end of the exterior trim panel 10 and a lower end of the interior trim panel 20 together define an installation structure 30 for installing a window frame seal 60. The above structure eliminates the original window frame and side seal to reduce the number of components and parts and the costs, and avoids the aesthetic problems caused by the original window frame and side seal being exposed, to reflect a simple, novel and beautiful styling.

In the embodiment, as shown in FIG. 1, the lower end of the exterior trim panel 10 is provided with a raised limit rib 11 on an inner side thereof. The lower end of the interior trim panel 20 includes a bottom 21 extending inwardly and a hook 22 bent towards the exterior trim panel 10 from an end of the bottom 21 away from the exterior trim panel 10. The hook 22 is arranged opposite to the limit rib 11. The limit rib 11, the bottom 21 and the hook 22 together define the installation structure 30 for catching the window frame seal 60. Optionally, the limit rib 11 extends towards an inner and lower side of the vehicle.

In the present embodiment, the limit rib 11 forms the installation structure 30 together with the bottom 21 and the hook 22, and the limit rib 11 is provided on the inner side of the exterior trim panel 10 and corresponding to the hook 22, such that the entire installation structure 30 is hidden inside the exterior trim panel, which further improves the aesthetics of the structure while ensuring the installation of the window frame seal 60.

In an even further embodiment, the exterior trim panel 10 completely covers the entire installation structure 30 and window frame seal 60 on the side of the vehicle, making the installation structure 30 and the window frame seal 60 completely invisible to the user from outside the vehicle, thereby further improving the aesthetics of the structure.

FIG. 2 is a schematic cross-sectional view of a side trim assembly 100 in an assembled state with a first fastener 40 according to another embodiment of the present invention. As shown in FIG. 2, in this embodiment, the interior trim panel 20 is provided with a boss 23 that protrudes towards the body side assembly 200, and a first installation hole 231 is provided on a top surface of the boss 23 for the first fastener 40 to pass through, such that the side trim assembly 100 is fixed to the body side assembly 200.

As shown in FIG. 1, the bottom 21 is provided with a second installation hole 211 for a second fastener 50 to pass through, such that the side trim assembly 100 is fixed to the body side assembly 200.

In an embodiment, the side trim assembly 100 shown in FIG. 1 is installed to the body side assembly 200 at a front door, and the side trim assembly 100 shown in FIG. 2 is installed to the body side assembly 200 at a rear door. The exterior trim panel 10 in FIG. 1 and FIG. 2 can be a single sheet metal part, or can be formed by splicing multiple parts. The interior trim panel 20 in FIG. 1 and FIG. 2 can be an integrally formed sheet metal part with the boss 23 and the first installation hole 231 formed in different positions, or can be formed by combining and splicing multiple parts.

The present invention provides a vehicle including the body side assembly 200 and the above side trim assembly 100.

The vehicle includes the side trim assembly 100. The side trim assembly 100 includes an exterior trim panel 10 and an interior trim panel 20 fixedly connected to each other. The interior trim panel 20 is connected to a body side assembly 200, and a lower end of the exterior trim panel 10 and a lower end of the interior trim panel 20 together define an installation structure 30 for installing a window frame seal 60. The above structure eliminates the original window frame and side seal to reduce the number of components and parts and the costs, and avoids the aesthetic problems caused by the original window frame and side seal being exposed.

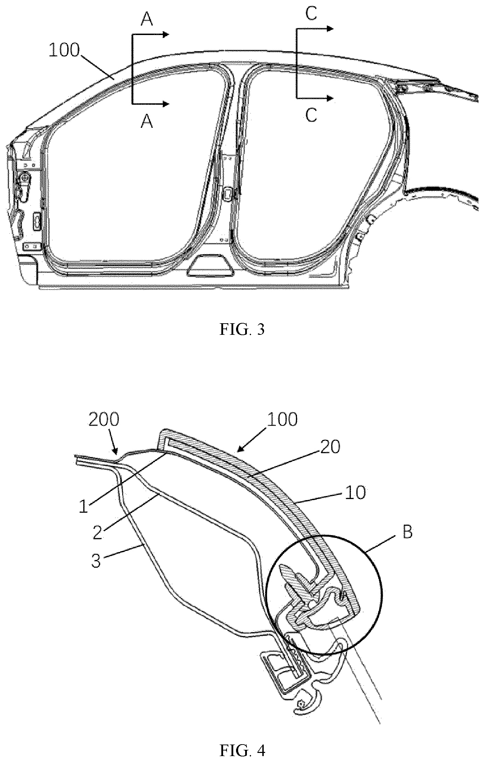

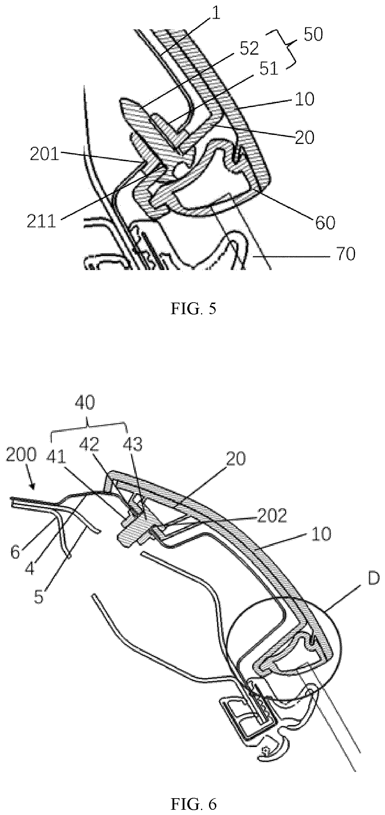

FIG. 3 is a front view of a door of a vehicle according to an embodiment of the present invention. FIG. 4 is a cross-sectional view taken along line A-A in FIG. 3. FIG. 5 is a partial enlarged view of part B in FIG. 4. As shown in FIG. 3 and FIG. 4, the body side assembly 200 includes a front door side assembly 200, i.e., the body side assembly 200 located at a front door. The front door side assembly 200 includes a front exterior panel 1, a front reinforcement plate 2, and a front interior panel 3 sequentially provided in the direction from the outer side to the inner side of the door. A lower end of the front exterior panel 1 is configured in a shape matching the bottom 21 of the interior trim panel 20, and is provided with a third installation hole 201 aligned with the second installation hole 211 for a second fastener 50 to pass through. As shown in FIG. 5, optionally, the second fastener 50 includes an expansion nut 51 and a screw 52 matching each other. The expansion nut 51 passes through the third installation hole 201 and a cap of the expansion nut 51 is located between the front exterior panel 1 and the interior trim panel 20. The screw 52 passes through the second installation hole 211 in the interior trim panel 20 from a side of the interior trim panel 20 away from the front exterior panel 1, and is tightened with the expansion nut 51. Optionally, the expansion nut 51 can be a square plastic expansion nut, and accordingly, the third installation hole 201 is a square hole.

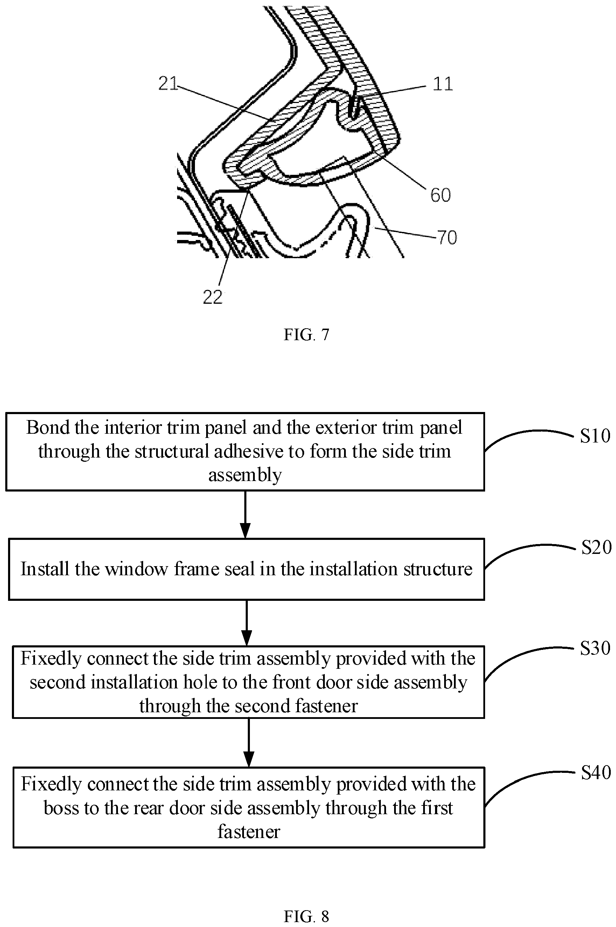

FIG. 6 is a cross-sectional view taken along line C-C in FIG. 3. FIG. 7 is a partial enlarged view of part D in FIG. 6. As shown in FIG. 6, the body side assembly 200 further includes a rear door side assembly 200. The rear door side assembly 200 includes a rear exterior panel 4, a rear reinforcement plate 5, and a rear interior panel 6 sequentially provided in the direction from the outer side to the inner side of the door. An upper portion of the rear exterior panel 4 is configured in a shape matching the boss 23 of the interior trim panel 20, and is provided with a fourth installation hole 202 aligned with the first installation hole 231 in the boss 23 for the first fastener 40 to pass through. Optionally, as shown in FIG. 6, the first fastener 40 includes a metal nut 41, a sealing gasket 42, and a bolt 43 matching each other. The bolt 43 passes through the first installation hole 231 in the boss 23, the sealing gasket 42, and the fourth installation hole 202 in the rear exterior panel 4 in sequence, and is tightened with the metal nut 41.

The front/rear exterior panel in FIGS. 4 and 6 may be an integrally formed sheet metal part with structures matching the side trim assembly 100 formed in different positions, or can be divided into multiple parts combined and spliced together. The front/rear interior panel in FIGS. 4 and 6 can be an integrally formed sheet metal part, or can be divided into multiple parts combined and spliced together. Similarly, the front/rear reinforcement plate in FIGS. 4 and 6 can be an integrally formed sheet metal part, or can be divided into multiple parts combined and spliced together.

As shown in FIG. 5 or FIG. 7, the installation structure 30 at the lower end of the side trim assembly 100 is configured to install the window frame seal 60 for sealing a window glass 70.

The installation structure for installing the window frame seal is integrated into the side trim assembly 100 in the vehicle according to the present invention, and the side trim assembly 100 can be installed and fixed to the body side assembly 200 only through the first fastener 40 and the second fastener 50. Therefore, compared with the structure provided with the window frame and the side seal in the related art, the number of assembly processes is reduced during assembly, the production cost and the production time are reduced, and the production efficiency is improved, while reducing the probability of production rework and scrap and improving the quality of the whole vehicle. Due to the elimination of the window frame and the side seal, the management cost is reduced.

Based on the structure of the side trim assembly 100 as described above, a simpler assembly method can be enabled. FIG. 8 is a flowchart of a method of assembling the side trim assembly 100 according to an embodiment of the present invention. The method is applied to the vehicle as described above. In an embodiment, as shown in FIG. 8, the method includes steps S10 to S40.

At step S10, the interior trim panel 20 and the exterior trim panel 10 are bonded through the structural adhesive to form the side trim assembly.

At step S20, the window frame seal 60 is installed in the installation structure 30.

At step S30, the side trim assembly 100 provided with the second installation hole 211 is fixedly connected to the front door side assembly 200 through the second fastener 50. The square plastic expansion nut in the second fastener 50 is first pre-assembled in the third installation hole 201 of the front exterior panel 1. When the side trim assembly 100 is assembled with the front door side assembly 200, the side trim assembly 100 is fixedly connected to the front door side assembly 200 by tightening the screw 52 with the square plastic expansion nut.

At step S40, the side trim assembly 100 provided with the boss 23 is fixedly connected to the rear door side assembly 200 through the first fastener 40. The bolt 43 and the sealing gasket 42 in the first fastener 40 are pre-assembled at the first installation hole 231 in the boss 23. When the side trim assembly 100 is assembled with the rear door side assembly 200, the side trim assembly 100 is fixedly connected to the rear door side assembly 200 by tightening the bolt 43 with the metal nut 41.

It should be noted that the order of the above step S20, step S30 and step S40 can be exchanged, which is not limited herein.

The installation structure 30 for installing the window frame seal 60 is integrated into the side trim assembly 100 according to the present invention. Therefore, compared with the structure provided with the window frame and the side seal in the related art, the number of assembly processes is reduced during assembly, the production cost and the production time are reduced, and the production efficiency is improved, while reducing the probability of production rework and scrap and improving the quality of the whole vehicle. Due to the elimination of the window frame and the side seal, the management cost is reduced.

So far, those skilled in the art should appreciate that though the exemplary embodiments of the present invention have been shown and described in detail herein, many other variations or modifications consistent with the principles of the present invention can be directly determined or derived from the disclosure of the present invention without departing from the scope of the present invention, as defined by the claims. Accordingly, the scope of the present invention should be understood and deemed to cover all such other variations or modifications.

## Claims

1. A vehicle, comprising a body side assembly (200) and a side trim assembly (100), wherein the side trim assembly (100) comprises an exterior trim panel (10) and an interior trim panel (20) sequentially provided in a direction from an outer side to an inner side of a door of the vehicle and fixedly connected to each other, wherein a side of the interior trim panel (20) away from the exterior trim panel (10) is connected to the body side assembly (200), and a lower end of the exterior trim panel (10) and a lower end of the interior trim panel (20) together define an installation structure (30) for installing a window frame seal (60),
wherein, the lower end of the exterior trim panel (10) is provided with a raised limit rib (11) on an inner side thereof;
the lower end of the interior trim panel (20) comprises a bottom (21) extending inwardly, **characterized in that** the lower end of the interior trim panel (20) comprises a hook (22) bent towards the exterior trim panel (10) from an end of the bottom (21) away from the exterior trim panel (10), the hook (22) being arranged opposite to the limit rib (11); and
the limit rib (11), the bottom (21) and the hook (22) together define the installation structure (30) for catching the window frame seal (60).

2. The vehicle according to claim 1, wherein
the limit rib (11) extends towards an inner and lower side of the vehicle.

3. The vehicle according to claim 1 or 2, wherein
the interior trim panel (20) is provided with a boss (23) that protrudes towards the body side assembly (200), and a first installation hole (231) is provided on a top surface of the boss (23) for a first fastener (40) to pass through, such that the side trim assembly (100) is fixed to the body side assembly (200).

4. The vehicle according to claim 1 or 2, wherein
a second installation hole (211) is provided at the bottom (21) for a second fastener (50) to pass through, such that the side trim assembly (100) is fixed to the body side assembly (200).

5. The vehicle according to any one of claims 1-4, wherein
the interior trim panel (20) is fixed to the exterior trim panel (10) by bonding.

6. The vehicle according to claim 1, wherein
the body side assembly (200) comprises a front door side assembly, the front door side assembly comprising a front exterior panel (1), a front reinforcement plate (2), and a front interior panel (3) sequentially provided in the direction from the outer side to the inner side of the door; and
a lower end of the front exterior panel (1) is configured in a shape matching the bottom (21) of the interior trim panel (20), and is provided with a third installation hole (201) aligned with a second installation hole (211) at the bottom (21) of the interior trim panel (20) for a second fastener (50) to pass through.

7. The vehicle according to claim 6, wherein
the second fastener (50) comprises an expansion nut (51) and a screw (52) matching each other;
the expansion nut (51) passes through the third installation hole (201) and a cap of the expansion nut (51) is provided between the front exterior panel (1) and the interior trim panel (20); and
the screw (52) passes through the second installation hole (211) of the interior trim panel (20) from a side of the interior trim panel (20) away from the front exterior panel (1) and is tightened with the expansion nut (51).

8. The vehicle according to claim 1, wherein
the body side assembly (200) comprises a rear door side assembly, the rear door side assembly comprising a rear exterior panel (4), a rear reinforcement plate (5), and a rear interior panel (6) sequentially provided in the direction from the outer side to the inner side of the door; and
an upper portion of the rear exterior panel (4) is configured in a shape matching a boss (23) of the interior trim panel (20), and is provided with a fourth installation hole (202) aligned with a first installation hole (231) in the boss (23) for a first fastener (40) to pass through.

9. The vehicle according to claim 8, wherein
the first fastener (40) comprises a metal nut (41), a sealing gasket (42), and a bolt (43) matching each other, and the bolt (43) passes through the first installation hole (231) in the boss (23), the sealing gasket (42), and the fourth installation hole (202) in the rear exterior panel (4) in sequence, and is tightened with the metal nut (41).

10. The vehicle according to any one of claims 1-9, wherein the exterior trim panel (10) completely covers the installation structure (30) and the window frame seal (60) on a side of the vehicle.

## Patentansprüche

1. Fahrzeug, umfassend eine Karosserieseitenbaugruppe (200) und eine Seitenverkleidungsbaugruppe (100), wobei die Seitenverkleidungsbaugruppe (100) ein äußeres Verkleidungspaneel (10) und ein inneres Verkleidungspaneel (20) umfasst, die aufeinanderfolgend in einer Richtung von einer Außenseite zu einer Innenseite einer Tür des Fahrzeugs vorgesehen und fest miteinander verbunden sind, wobei eine von dem äußeren Verkleidungspaneel (10) abgewandte Seite des inneren Verkleidungspaneels (20) mit der Karosserieseitenbaugruppe (200) verbunden ist, wobei ein unteres Ende des äußeren Verkleidungspaneels (10) und ein unteres Ende des inneren Verkleidungspaneels (20) zusammen eine Montagestruktur (30) zum Installieren einer Fensterrahmendichtung (60) definieren,
wobei das untere Ende des äußeren Verkleidungspaneels (10) an einer Innenseite mit einer erhöhten Begrenzungsrippe (11) versehen ist;
Wobei das untere Ende des inneren Verkleidungspaneels (20) einen sich nach innen erstreckenden Boden (21) aufweist, **dadurch gekennzeichnet, dass** das untere Ende des inneren Verkleidungspaneels (20) einen Haken (22) aufweist, der von einem von dem äußeren Verkleidungspaneel (10) abgewandten Ende des Bodens (21) zum äußeren Verkleidungspaneel (10) hin gebogen ist, wobei der Haken (22) gegenüber der Begrenzungsrippe (11) angeordnet ist; und
wobei die Begrenzungsrippe (11), der Boden (21) und der Haken (22) zusammen die Montagestruktur (30) zur Aufnahme der Fensterrahmendichtung (60) bilden .

2. Fahrzeug nach Anspruch 1, wobei sich die Begrenzungsrippe (11) zu einer inneren und unteren Seite des Fahrzeugs erstreckt.

3. Fahrzeug nach Anspruch 1 oder 2, wobei das innere Verkleidungspaneel (20) mit einem Vorsprung (23) versehen ist, der in Richtung der Karosserieseitenbaugruppe (200) vorsteht, wobei ein erstes Montageloch (231) auf einer oberen Fläche des Vorsprungs (23) vorgesehen ist, durch das ein erstes Befestigungselement (40) hindurchgeführt wird, so dass die Seitenverkleidungsbaugruppe (100) an der Karosserieseitenbaugruppe (200) befestigt ist.

4. Fahrzeug nach Anspruch 1 oder 2, wobei ein zweites Montageloch (211) am Boden (21) vorgesehen ist, durch das ein zweites Befestigungselement (50) hindurchgeführt wird, so dass die Seitenverkleidungsbaugruppe (100) an der Karosserieseitenbaugruppe (200) befestigt ist.

5. Fahrzeug nach einem der Ansprüche 1 bis 4, wobei das innere Verkleidungspaneel (20) durch Verkleben an das äußere Verkleidungspaneel (10) befestigt wird .

6. Fahrzeug nach Anspruch 1, wobei die Seitenverkleidungsbaugruppe (200) eine Vordertür-Seitenverkleidungsbaugruppe umfasst, wobei die Vordertür-Seitenverkleidungsbaugruppe eine Vorderseitenverkleidungs-Außenplatte (1), eine Vorderseitenverkleidungs-Verstärkungsplatte (2) und eine Vorderseitenverkleidungs-Innenplatte (3) umfasst, die nacheinander in der Richtung von der Außenseite zur Innenseite der Tür vorgesehen sind; und
wobei ein unteres Ende der vorderen Vorderseitenverkleidungs-Außenplatte (1) in einer Form konfiguriert ist, die mit dem Boden (21) des inneren Verkleidungspaneels (20) übereinstimmt, und mit einem dritten Montageloch (201) versehen ist, das mit einem zweiten Montageloch (211) am Boden (21) des inneren Verkleidungspaneels (20) ausgerichtet ist, durch das ein zweites Befestigungselement (50) hindurchgeführt wird.

7. Fahrzeug nach Anspruch 6, wobei das zweite Befestigungselement (50) eine Dehnmutter (51) und eine Schraube (52) umfasst, die zueinander passen;
die Dehnmutter (51) durch das dritte Montageloch (201) hindurchgeht und eine Kappe der Dehnmutter (51) zwischen der Vorderseitenverkleidungs-Außenplatte (1) und dem inneren Verkleidungspaneel (20) vorgesehen ist; und
die Schraube (52) durch das zweite Montageloch (211) des inneren Verkleidungspaneels (20) von einer von der Vorderseitenverkleidungs-Außenplatte (1) abgewandten Seite des inneren Verkleidungspaneels (20) hindurchgeführt und mit der Dehnmutter (51) angezogen wird.

8. Fahrzeug nach Anspruch 1, wobei die Seitenverkleidungsbaugruppe (200) eine Hintertür-Seitenverkleidungsbaugruppe umfasst, wobei die Hintertür-Seitenverkleidungsbaugruppe eine Hinterseitenverkleidungs-Außenplatte (4), eine Hinterseitenverkleidungs-Verstärkungsplatte (5) und eine Hinterseitenverkleidungs-Innenplatte (6) umfasst, die nacheinander in der Richtung von der Außenseite zur Innenseite der Tür vorgesehen sind; und
ein oberer Abschnitt der Hinterseitenverkleidungs-Außenplatte (4) in einer Form konfiguriert ist, die mit einem Vorsprung (23) des inneren Verkleidungspaneels (20) übereinstimmt, und mit einem vierten Montageloch (202) versehen ist, das mit einem ersten Montageloch (231) in dem Vorsprung (23) ausgerichtet ist, durch das ein erstes Befestigungselement (40) hindurchgeführt wird.

9. Fahrzeug nach Anspruch 8, wobei das erste Befestigungselement (40) eine Metallmutter (41), eine Dichtung (42) und einen Bolzen (43) umfasst, die zueinander passen, und der Bolzen (43) nacheinander durch das erste Montageloch (231) in dem Vorsprung (23), die Dichtung (42) und das vierte Montageloch (202) in der Hinterseitenverkleidungs-Außenplatte (4) hindurchgeführt und mit der Metallmutter (41) festgezogen wird.

10. Fahrzeug nach einem der Ansprüche 1 bis 9, wobei das äußere Verkleidungspaneel (10) die Montagestruktur (30) und die Fensterrahmendichtung (60) auf einer Seite des Fahrzeugs vollständig abdeckt.

## Revendications

1. Un véhicule, comprenant un ensemble de carrosserie latérale (200) et un ensemble de plaque de garniture latérale (100). Dans ledit ensemble de plaque de garniture latérale (100), une plaque de garniture latérale extérieure (10) et une plaque de garniture latérale intérieure (20), qui sont disposées successivement dans la direction allant du côté extérieur vers le côté intérieur de la portière et reliées fixement entre elles, sont incluses. Ladite plaque de garniture latérale intérieure (20), sur le côté éloigné de ladite plaque de garniture latérale extérieure (10), est reliée au dit l'ensemble de carrosserie latérale (200). La partie inférieure de ladite plaque de garniture latérale extérieure (10) et la partie inférieure de ladite plaque de garniture latérale intérieure (20) définissent conjointement une structure d'installation (30) destinée à installer le joint d'étanchéité de la fenêtre (60),
dans lequel,
sur le côté intérieur de la partie inférieure de ladite plaque de garniture latérale extérieure (10), une nervure de butée (11) en saillie est disposée,
la partie inférieure de ladite plaque de garniture latérale intérieure (20) comprend un fond (21) s'étendant vers son côté intérieur,
il est caractéristique en ce que la partie inférieure de ladite plaque de garniture latérale intérieure (20) comprend un crochet (22) plié dans la direction de ladite plaque de garniture latérale extérieure (10), depuis l'extrémité dudit fond (21) éloignée de la plaque de garniture latérale extérieure (10). Ledit crochet (22) est disposé en regard de ladite nervure de butée (11),
ladite nervure de butée (11), ledit fond (21) et ledit crochet (22) définissent conjointement ladite structure d'installation (30) permettant de fixer par encliquetage ledit joint d'étanchéité de la fenêtre (60).

2. Selon ledit véhicule décrit à la revendication 1,
ladite nervure de butée (11) s'étend dans la direction allant vers le bas et le côté intérieur du véhicule.

3. Selon ledit véhicule décrit dans la revendication 1 ou 2,
ladite plaque de garniture latérale intérieure (20) est pourvue d'un plot en saillie (23) orienté vers ledit ensemble de carrosserie latérale (200). Sur la surface supérieure dudit plot (23), un premier trou d'installation (231) est ménagé, destiné à recevoir un premier élément de fixation (40) afin de fixer ledit ensemble de plaque de garniture latérale (100) sur ledit ensemble de carrosserie latérale (200).

4. Selon ledit véhicule décrit dans la revendication 1 ou 2, dans lequel,
au niveau dudit fond (21), un deuxième trou d'installation (211) est ménagé, destiné à recevoir un deuxième élément de fixation (50) afin de fixer ledit ensemble de plaque de garniture latérale (100) sur ledit ensemble de carrosserie latérale (200).

5. Selon ledit véhicule décrit dans l'une quelconque des revendications 1 à 4, dans lequel,
ladite plaque de garniture latérale intérieure (20) et ladite plaque de garniture latérale extérieure (10) sont fixées par collage.

6. Selon ledit véhicule décrit dans la revendication 1, dans lequel,
ledit ensemble de carrosserie latérale (200) comprend un ensemble de carrosserie latérale de porte avant. Ledit ensemble de carrosserie latérale de porte avant comprend une plaque de carrosserie latérale avant extérieure (1), une plaque de renforcement de carrosserie latérale avant (2) et une plaque de carrosserie latérale avant intérieure (3), qui sont disposées successivement dans la direction allant du côté extérieur vers le côté intérieur de la portière,
la partie inférieure de ladite plaque de carrosserie latérale avant extérieure (1) est configurée en une forme qui correspond à celle dudit fond (21) de ladite plaque de garniture latérale intérieure (20), et est pourvue d'un troisième trou d'installation (201) aligné avec le deuxième trou d'installation (211) sur ledit fond (21) de ladite plaque de garniture latérale intérieure (20), destiné à recevoir le deuxième élément de fixation (50).

7. Selon ledit véhicule décrit dans la revendication 6, dans lequel,
ledit deuxième élément de fixation (50) comprend une douille de gonflement (51) et une vis (52) qui sont adaptées l'une à l'autre,
ladite douille de gonflement (51) passe à travers ledit troisième trou d'installation (201) et sa partie de tête est disposée entre ladite plaque de carrosserie latérale avant extérieure (1) et ladite plaque de garniture latérale intérieure (20),
ladite vis (52) passe, depuis le côté de ladite plaque de garniture latérale intérieure (20) éloigné de ladite plaque de carrosserie latérale avant extérieure(1), à travers ledit deuxième trou d'installation (211) de la plaque de garniture latérale intérieure (20), puis est serrée sur ladite douille de gonflement (51).

8. Selon ledit véhicule décrit dans la revendication 1, dans lequel,
ledit ensemble de carrosserie latérale (200) comprend un ensemble de carrosserie latérale de porte arrière. Ledit ensemble de carrosserie latérale de porte arrière comprend une plaque de carrosserie latérale arrière extérieure (4), une plaque de renforcement de carrosserie latérale arrière (5) et une plaque de carrosserie latérale arrière intérieure (6), qui sont disposées successivement dans la direction allant du côté extérieur vers le côté intérieur de la portière,
la partie supérieure de ladite plaque de carrosserie latérale arrière extérieure (4) est configurée en une forme qui correspond à celle dudit plot (23) de ladite plaque de garniture latérale intérieure (20), et est pourvue d'un quatrième trou d'installation (202) aligné avec le premier trou d'installation (231) sur ledit plot (23), destiné à recevoir le premier élément de fixation (40).

9. Selon ledit véhicule décrit dans la revendication 8, dans lequel,
ledit premier élément de fixation (40) comprend un écrou métallique (41), une rondelle d'étanchéité (42) et un boulon (43) qui sont adaptés les uns aux autres. Ledit boulon (43) passe successivement à travers ledit premier trou d'installation (231) dudit plot (23), ladite rondelle d'étanchéité (42) et ledit quatrième trou d'installation (202) de ladite plaque de carrosserie latérale arrière extérieure (4), puis est serré sur ladite écrou métallique (41).

10. Selon ledit véhicule décrit dans l'une quelconque des revendications 1 à 9, dans lequel, ladite plaque de garniture latérale extérieure (10) recouvre complètement dans la direction latérale du véhicule ladite structure d'installation (30) et ledit joint d'étanchéité de la fenêtre (60).
